# EUROPÄISCHE PATENTSCHRIFT

(11) **EP 3 247 216 B1**
(45) Veröffentlichungstag und Bekanntmachung des Hinweises auf die Patenterteilung: **24.04.2019**
(21) Anmeldenummer: 16700623.8
(22) Anmeldetag: 14.01.2016
(51) Int. Cl.: A22C 17/00, B02C 18/06, B02C 23/18

(54) **AUFTAUKUTTER**
DEFROSTER-CUTTER
CUTTER À FONCTION DÉCONGÉLATION

(30) Priorität: 20.01.2015 DE 102015200877
(43) Veröffentlichungstag der Anmeldung: 29.11.2017
(73) Patentinhaber: GEA Food Solutions Germany GmbH, 35216 Biedenkopf-Wallau (DE)
(72) Erfinder: STEINHANSES, André, 57334 Bad Laasphe (DE)
(74) Vertreter: Kutzenberger Wolff & Partner
(86) Internationale Anmeldenummer: PCT/EP2016/050689
(87) Internationale Veröffentlichungsnummer: WO 2016/116353

(56) Entgegenhaltungen:
- AT-B- 410 060
- DE-A1- 2 942 940
- DE-B- 1 060 283
- DE-U- 7 220 075

## Beschreibung

Die vorliegende Erfindung betrifft einen Kutter mit einer sich drehenden Schüssel und ein stationär angeordneten, sich drehenden Messerkopf, der mindestens ein Messer aufweist, das ein gefrorenes Produkt zerkleinert, wobei die Schüssel mit einer Abdeckung abgedeckt ist und dadurch ein geschlossener Raum entsteht.

Derartige Kutter sind aus dem Stand der Technik, beispielsweise der DE 72 20 075 U, bekannt und werden beispielsweise zur Zerkleinerung von Fleischstücken eingesetzt, um daraus z.B. sogenanntes Brät, das dann zu Würsten verarbeitet wird oder eine Emulsion herzustellen. In dem Kutter kann dem Fleisch ein Zusatzstoff, wie beispielsweise Gewürze oder dergleichen zugesetzt und mit diesem vermischt werden. Oftmals ist das zu verarbeitende Fleisch jedoch gefroren, so dass der Herstellungsprozess des Bräts bzw. der Emulsion vergleichsweise lange dauert,

Es war deshalb die Aufgabe der vorliegenden Erfindung, einen Kutter zur Verfügung zu stellen, der die Nachteile des Standes der Technik nicht aufweist.

Gelöst wird die Aufgabe mit einem Kutter gemäß Patentanspruch 1.

Die vorliegende Erfindung betrifft einen Kutter mit einer sich drehenden Schüssel. In dieser Schüssel wird das zu zerkleinernde Produkt, das in dem vorliegenden Fall erfindungsgemäß gefroren ist, in Richtung eines Messerkopfes transportiert, der mindestens ein Messer aufweist. Der Messerkopf und damit das Messer dreht sich, wodurch das Fleisch zerkleinert wird. Die Schüssel ist rotationssymmetrisch, vorzugsweise halbtorusförmig, gestaltet, so dass das zu zerkleinernde Produkt den Messerkopf immer wieder passiert und dadurch immer weiter zerkleinert und/oder gemischt wird, so dass im Endeffekt beispielsweise ein Brät oder eine Emulsion entsteht.

Erfindungsgemäß ist die Schüssel mit einer Abdeckung versehen, so dass ein geschlossener Raum entsteht.

Erfindungsgemäß weist der Kutter nun mindestens ein, vorzugsweise mehrere Mittel auf, um in den Raum in und/oder oberhalb der Kutterschüssel Wasserdampf einzublasen und um in dem geschlossenen Raum einen Unterdruck zu erzeugen. Dadurch ist es erfindungsgemäß möglich, dass Produkt zu zerkleinern und gleichzeitig aufzutauen.

Das zu verarbeitende Produkt ist vorzugsweise jedes dem Fachmann geläufige Fleisch, beispielsweise von einem Rind, einem Schwein, einem Schaf, Wild sowie Geflügelfleisch oder deren Mischung. Oftmals werden in die Kutterschüssel gefrorene Fleischblöcke eingefüllt, die aus einer Vielzahl von Einzelstücken, beispielsweise Geflügelfleischstücken, bestehen.

Vorzugsweise weist der Kutter in dem geschlossenen Raum einen Druck und/oder einen Temperatursensor auf. Der Temperatursensor misst dabei vorzugsweise die Temperatur der in dem Raum vorhandenen Gasphase und/oder die Temperatur des zerkleinerten Produkts und reguliert vorzugsweise basierend auf dieser Temperaturmessung die Wasserdampfzufuhr und/oder den Unterdruck.

Erfindungsgemäß weist der Kutter in dem geschlossenen Raum eine Druckmessung auf, deren Signal ein Unterdruckmittel, beispielsweise eine Vakuumpumpe steuert. Sobald der Unterdruck unter einen gewünschten Wert abfällt, wird das Unterdruckmittel aktiviert und/oder die Wasserdampfzufuhr zumindest vermindert. Sobald der Unterdruck einen gewünschten Wert erreicht oder unterschritten hat, kann in den Raum wieder Wasserdampf eingeblasen werden.

Dadurch dass der Kutter das Fleisch nicht nur zerkleinert, sondern auch ständig mischt, wird die Grenzfläche zwischen der Wasserdampf enthaltenden Gasphase und dem Fleisch ständig erneuert und durch das Zerkleinern zudem die Oberfläche vergrößert, wodurch ein sehr guter Wärmeaustausch entsteht. Der Wasserdampf kondensiert in oder an dem Fleischprodukt und wird in dieses eingemischt. Gleichzeitig oder zusätzlich findet ein verbesserter Zellenaufschluss statt, der das Wasser- und Fettbindevermögen des Produkts erhöht.

Vorzugsweise befindet sich das Mittel zur Zuführung des Wasserdampfs und/oder das Mittel, das den Unterdruck erzeugt, oberhalb der Schüssel, insbesondere oberhalb der Produktmasse. Besonders bevorzugt ist das Mittel im Bereich der Abdeckung vorgesehen. Besonders bevorzugt befindet sich insbesondere die Wasserdampfzufuhr im Bereich des Messerkopfes, weil hier die Durchmischung des Produktes besonders intensiv ist.

Bei dem Mittel zur Erzeugung des Unterdrucks kann es sich beispielsweise um eine Vakuumpumpe handeln.

Ein weiterer Gegenstand der vorliegenden Erfindung ist ein Verfahren gemäß Patentanspruch 4

Die zu dem erfindungsgemäßen Kutter gemachten Ausführungen gelten für das erfindungsgemäße Verfahren gleichermaßen und umgekehrt.

Vorzugsweise wird der Dampf im Bereich der Abdeckung in den Raum geblasen, besonders bevorzugt im Bereich vor, insbesondere unmittelbar vor dem Messerkopf, bezogen auf die Bewegungsrichtung des zu zerkleinernden Produkts und/oder im Bereich des Messerkopfs. Der Wasserdampf befindet sich dadurch oberhalb der zu zerkleinernden Fleischmasse und erwärmt dessen Oberfläche. Teilweise wird er auch mit den Messern des Messerkopfs in das zu zerkleinernde Fleisch eingemischt. Dadurch dass die Messer des sich drehenden Messerkopfs das zu zerkleinernde Fleisch auch mischen, wird die Oberfläche des zerkleinerten Fleisches ständig erneuert, wodurch sich der Wärmeaustauch zwischen dem Wasserdampf und dem Fleisch verbessert. Der Wasserdampf kondensiert in oder an dem zu zerkleinernden bzw. bereits zerkleinerten Fleisch.

Gemäß einem weiteren erfindungsgemäßen oder bevorzugten Gegenstand der vorliegenden Erfindung erfolgt die Zerkleinerung des Fleisches zumindestens zeitweise zeitlich parallel zu dessen Auftauen. Dadurch wird sehr viel Zeit bei der Herstellung des Brät beziehungsweise der Emulsion eingespart. Darüber hinaus muss lediglich ein Apparat für das Auftauen des Fleisches und dessen Zerkleinerung zur Verfügung gestellt werden. Beide Verfahrensabschnitte finden in demselben erfindungsgemäßen Kutter statt.

Vorzugsweise beträgt der Unterdruck in dem Kutter 20 - 50 mbar. Vorzugsweise weist der Kutter ein Druckmesser, beispielsweise eine Druckmessdose, auf, anhand deren Signals der Unterdruck in dem Kutter geregelt wird.

Vorzugsweise übersteigt die Temperatur des Wasserdampfes 60 °C, besonders bevorzugt 50 °C und noch mehr bevorzugt 40°C nicht. Dadurch wird vermieden, dass das zu zerkleinernde Fleisch bzw. das herzustellende Brät bzw. die Emulsion zu stark erhitzt und bereits teilweise gekocht wird und/oder das darin enthaltene Eiweiß koaguliert.

Vorzugsweise erfolgt die Zugabe des Dampfes intermittierend. Während der Zugabe des Dampfes kann das Vakuummittel, beispielsweise die Vakuumpumpe, eingeschaltet sein oder nicht. Die Zugabe des Dampfes kann beispielsweise mittels der vorhandenen Druckmessung geregelt werden. Sobald ein bestimmter minimaler Unterdruck überschritten ist, wird die Dampfzufuhr abgeschaltet und das Vakuummittel wird dann solange aktiviert, bis der Unterdruck in dem Raum wieder einen gewünschten Wert eingenommen oder unterschritten hat. Sodann kann die Zugabe von weiterem Wasserdampf erfolgen, sofern dies für den Auftauprozess des Fleisches vonnöten ist.

Vorzugsweise übersteigt die Temperatur des Bräts und der Emulsion 0 °C, besonders bevorzugt -1 °C nicht.

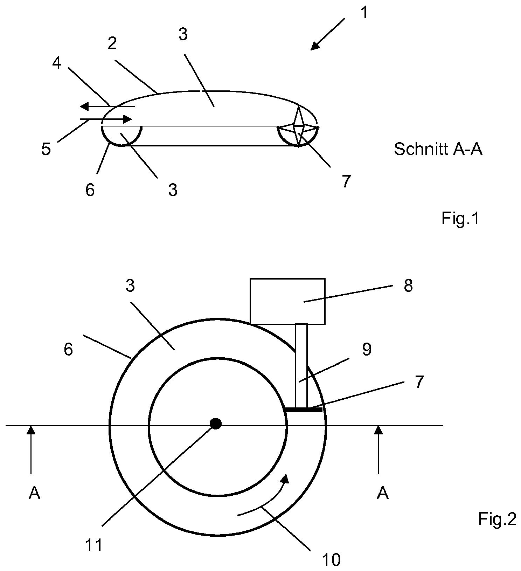

Im Folgenden wird die Erfindung anhand der Figuren 1 und 2 erläutert. Diese Erläuterungen sind lediglich beispielhaft und schränken den allgemeinen Erfindungsgedanken nicht ein. Die Erläuterungen gelten für den erfindungsgemäßen Kutter und die erfindungsgemäßen Verfahren gleichermaßen.

**Figuren 1 und 2** zeigen jeweils eine Ansicht des Kutters.

Wie den **Figuren 1 und 2** entnommen werden kann, weist der Kutter eine Schüssel 6 auf, die halbtorusförmig gestaltet ist und die sich wie durch den Pfeil 10 dargestellt ist, während des Betriebes um die Drehachse 11 dreht. Das zu zerkleinernde Produkt, beispielsweise gefrorenes Fleisch, wird in die Schüssel eingefüllt und sodann wird das zu zerkleinernde Fleisch durch die Schüssel in Richtung eines sich drehenden Messerkopfs 7 transportiert, der beispielsweise auf einer Welle 9 vorgesehen ist, die drehend mittels eines Motors 8, insbesondere eines Elektromotors angetrieben ist. Der Messerkopf 7 weist mindestens ein, vorzugsweise eine Vielzahl von Messern auf, die das zu zerkleinernde Produkt, in den vorliegenden Fall gefrorenes Fleisch, zerkleinert. Dadurch, dass sich die Schüssel dreht, wird das zu zerkleinernde Fleisch immer wieder an dem Messerkopf vorbeigeführt und dabei weiter zerkleinert bzw. auch durchmischt, bis das zu erzeugende Produkt, beispielsweise ein Brät, mit dem Bratwurst und ein anderes wurstartiges Produkt hergestellt wird oder beispielsweise eine Emulsion, die gewünschte Konsistenz aufweist. Die Schüssel 6 dreht sich um die Drehachse 11. Die Schüssel wird von einer Abdeckung 2 abgedeckt, so dass ein geschlossener Raum 3 entsteht, der sich abschnittsweise oberhalb der Schüssel aber auch in der Schüssel befindet.

Wie durch den Pfeil 4 dargestellt, kann dieser Raum mit einem Unterdruck versehen werden und in diesen Raum oberhalb der Schüssel oder in die Schüssel selbst kann, wie durch den Pfeil 5 dargestellt, Wasserdampf in den Raum eingeblasen werden. Dieser Wasserdampf kondensiert an der Oberfläche des gefrorenen Fleischprodukts und taut Dieses dadurch auf. Dabei kondensiert der Wasserdampf zu Wasser, das mittels des Messerkopfes mit dem zu zerkleinernden Fleisch bzw. mit dem bereits zerkleinerten Fleisch vermischt wird. Der Wasserdampf gibt dabei seine Phasenänderungsenergie an das gefrorene Produkt ab. Dadurch dass der Messerkopf das Fleisch nicht nur zerkleinert, sondern auch durchmischt, kann der Wasserdampf vorzugsweise auch teilweise mit dem bereits zerkleinerten Produkt vermischt werden. Erfindungsgemäß weist der Kutter eine nicht dargestellte Druckmessung auf, die den Druck in dem Raum 3 misst. Aufgrund dieser Messung wird beispielsweise das Vakuummittel, insbesondere einer Vakuumpumpe, und/oder die Zugabe von Wasserdampf, so gesteuert, dass ein gewisser Unterdruck in dem Raum 3 während der Herstellung des resultierenden Produktes, beispielsweise des Bräts oder der Emulsion nicht überschritten wird. Der reduzierte Druck hat zur Folge, dass der Wasserdampf bei einer geringeren Temperatur als 100°C kondensiert und dadurch bei einer geringeren Temperatur seine Verdampfungsenthalpie an das Produkt abgibt. Dadurch wird die Gefahr, dass das resultierende Produkt beim Auftauen überhitzt wird, zumindest vermindert.

Das Zerkleinern und das Auftauen des Produktes erfolgt erfindungsgemäß zumindest zeitweise gleichzeitig, so dass sehr viel Zeit für die Herstellung des Produktes eingespart werden kann, bzw. der Zerkleinerungs- und Auftauvorgang kann in einem Apparat, hier dem erfindungsgemäßen Kutter, erfolgen. Gleichzeitig wird das Wasser, das beim Auftauen durch das Schmelzen von Wasserkristallen aber auch durch die Kondensation des Dampfes entsteht, in das resultierende Produkt eingearbeitet. Der Fachmann versteht, dass dem Herstellvorgang Zusatzstoffe, beispielsweise Gewürze, zugesetzt werden können.

### Bezugszeichenliste:

- 1: Kutter
- 2: Abdeckung
- 3: Geschlossener Raum
- 4: Mittel zur Erzeugung eines Unterdrucks, Vakuums
- 5: Mittel zur Erzeugung von Dampf
- 6: Schüssel
- 7: Messerkopf
- 8: Antrieb, Motor
- 9: Welle
- 10: Drehrichtung der Schüssel
- 11: Drehachse der Schüssel

## Patentansprüche

1. Kutter (1) mit einer sich drehenden Schüssel (6) und einem stationär angeordneten sich drehenden Messerkopf (7), der mindestens ein Messer aufweist, das ein gefrorenes Produkt zerkleinert, wobei die Schüssel (6) mit einer Abdeckung (2) abgedeckt ist und dadurch ein geschlossener Raum (3) entsteht, wobei er Mittel (4, 5) aufweist, um in den Raum (3) Wasserdampf einzublasen und um einen Unterdruck zu erzeugen, wobei in dem geschlossenen Raum eine Druckmessung vorgesehen ist, deren Signal das Unterdruckmittel und die Dampfzufuhr steuert.

2. Kutter (1) nach Anspruch 1, **dadurch gekennzeichnet, dass** in dem Raum (3) ein Druck- und/oder ein Temperatursensor vorgesehen ist.

3. Kutter (1) nach einem der voranstehenden Ansprüche, **dadurch gekennzeichnet, dass** zumindest ein Mittel (4, 5) im Bereich der Abdeckung vorgesehen ist.

4. Verfahren zur Herstellung eines Bräts und/oder einer Emulsion mit einem Kutter (1) gemäß einem der voranstehenden Ansprüche, **dadurch gekennzeichnet, dass** gefrorenes Fleisch in die Schüssel (6) eingefüllt wird, die sich dreht und dadurch das Fleisch in Richtung des drehend angetriebenen Messerkopfs gefördert, dessen Messer das Fleisch zerkleinern, wobei vor und/oder während des Zerkleinerns ein Unterdruck in dem Raum (3) erzeugt und dem Raum (3) zumindest zeitweise Wasserdampf zugesetzt wird.

5. Verfahren nach Anspruch 4, **dadurch gekennzeichnet, dass** der Dampf im Bereich der Abdeckung (2) zugegeben wird.

6. Verfahren nach einem der voranstehenden Ansprüche , **dadurch gekennzeichnet, dass** die Zerkleinerung des Fleischs zumindest zeitweise parallel zu dessen Auftauen erfolgt.

7. Verfahren nach einem der voranstehenden Ansprüche, **dadurch gekennzeichnet, dass** der Unterdruck 20 - 150 mbar beträgt.

8. Verfahren nach einem der voranstehenden Ansprüche, **dadurch gekennzeichnet, dass** die Temperatur des Dampfes 60 °C, vorzugsweise 50°C, und besonders bevorzugt 40°C nicht übersteigt.

9. Verfahren nach einem der voranstehenden Ansprüche, **dadurch gekennzeichnet, dass** die Zugabe des Dampfes intermittierend erfolgt.

10. Verfahren nach einem der voranstehenden Ansprüche, **dadurch gekennzeichnet**, das die Temperatur des Bräts oder der Emulsion 0°C, vorzugsweise -1°C nicht übersteigt

## Claims

1. Cutter (1) having a rotating bowl (6) and a stationary-arrangement, rotating blade head (7), which has at least one blade for comminuting a frozen product, wherein the bowl (6) is covered by a cover (2) and this gives rise to a closed chamber (3), wherein the latter has means (4, 5) for blowing steam into the chamber (3) and generating a negative pressure, wherein the closed chamber contains a pressure gauge, the signal from which controls the negative-pressure means and the supply of steam.

2. Cutter (1) according to Claim 1, **characterized in that** a pressure sensor and/or a temperature sensor is provided in the chamber (3).

3. Cutter (1) according to either of the preceding claims, **characterized in that** at least one means (4, 5) is provided in the region of the cover.

4. Method for producing sausage meat and/or an emulsion using a cutter (1) according to one of the preceding claims, **characterized in that** frozen meat is introduced into the bowl (6), which rotates and thus delivers the meat in the direction of the rotationally driven blade head, of which the blades comminute the meat, wherein, prior to and/or during the comminuting operation, a negative pressure is generated in the chamber (3) and steam is added to the chamber (3) for at least part of the time.

5. Method according to Claim 4, **characterized in that** the steam is fed in the region of the cover (2).

6. Method according to either of the preceding claims, **characterized in that** the comminution of the meat takes place, for at least part of the time, in parallel with the defrosting of the same.

7. Method according to one of the preceding claims, **characterized in that** the negative pressure is 20-150 mbar.

8. Method according to one of the preceding claims, **characterized in that** the temperature of the steam does not exceed 60°C, preferably 50°C, and particularly preferably 40°C.

9. Method according to one of the preceding claims, **characterized in that** the steam is fed intermittently.

10. Method according to one of the preceding claims, **characterized in that** the temperature of the sausage meat or of the emulsion does not exceed 0°C, preferably -1°C.

## Revendications

1. Cutter (1) doté d'une cuvette tournante (6) et d'une tête de couteaux tournante (7) disposée de façon stationnaire, qui présente au moins un couteau, qui broie un produit congelé, dans lequel la cuvette (6) est recouverte par un couvercle (2) et il se forme ainsi un espace fermé (3), dans lequel il présente des moyens (4, 5) pour insuffler de la vapeur d'eau dans l'espace (3) et pour produire une dépression, dans lequel il est prévu dans l'espace fermé une mesure de pression, dont le signal commande le moyen de dépression et l'injection de vapeur.

2. Cutter (1) selon la revendication 1, **caractérisé en ce qu'**il est prévu un capteur de pression et/ou de température dans l'espace (3).

3. Cutter (1) selon l'une quelconque des revendications précédentes, **caractérisé en ce qu'**il est prévu au moins un moyen (4, 5) dans la région du couvercle.

4. Procédé de production de chair à saucisse et/ou d'une émulsion avec un cutter (1) selon l'une quelconque des revendications précédentes, **caractérisé en ce que** l'on dépose la viande congelée dans la cuvette (6), qui tourne et transporte ainsi la viande en direction de la tête de couteaux entraînée en rotation, dont les couteaux broient la viande, dans lequel on produit une dépression dans l'espace (3) avant et/ou pendant le broyage et on envoie dans l'espace (3), au moins temporairement, de la vapeur d'eau.

5. Procédé selon la revendication 4, **caractérisé en ce que** l'on ajoute la vapeur dans la région du couvercle (2) .

6. Procédé selon l'une quelconque des revendications précédentes, **caractérisé en ce que** l'on effectue le broyage de la viande au moins temporairement en parallèle avec sa décongélation.

7. Procédé selon l'une quelconque des revendications précédentes, **caractérisé en ce que** la dépression vaut 20 à 150 mbar.

8. Procédé selon l'une quelconque des revendications précédentes, **caractérisé en ce que** la température de la vapeur ne dépasse pas 60°C, de préférence 50°C et de préférence encore 40°C.

9. Procédé selon l'une quelconque des revendications précédentes, **caractérisé en ce que** l'on effectue l'ajout de la vapeur de façon intermittente.

10. Procédé selon l'une quelconque des revendications précédentes, **caractérisé en ce que** la température de la chair à saucisse ou de l'émulsion ne dépasse pas 0°C, de préférence -1°C.
